# DEMANDE DE BREVET EUROPEEN

(11) **EP 0 795 431 A1**
(43) Date de publication de la demande: **17.09.1997**
(21) Numéro de dépôt: 97400509.2
(22) Date de dépôt: 06.03.1997
(51) Int. Cl.: B60J 10/02

(54) **Vitrage automobile prééquipé pour le collage et procédé pour sa fabrication**

(30) Priorité: 13.03.1996 DE 19609747
(71) Demandeur: SAINT-GOBAIN VITRAGE, 92400 Courbevoie (FR)
(72) Inventeur: Cornils, Gerd, 52399 Merzenich (DE); Kötte, Rolf, 52477 Alsdorf-Begau (DE); Behrend, Ulrich, 52249 Escheweiler (DE); Verbeek, Stefan, 52525 Waldfeucht-Haaren (DE)
(74) Mandataire: Muller, René

(57) **Abrégé**

Un vitrage automobile (1) prééquipé pour le collage est pourvu d'un cadre profilé (3) en élastomère. Le profilé d'encadrement (3) présente pour la réception du cordon de colle (12), un segment en forme de chenal comportant des ailes latérales (5, 6), qui sont pourvues, sur leur face intérieure, de saillies d'ancrage (9). L'élastomère du profilé d'encadrement (3) n'établit aucune liaison adhésive avec la colle de montage (12), mais la liaison entre la colle de montage (12) et le profilé d'encadrement est plutôt assurée exclusivement par l'engagement mécanique avec épousement de forme entre la masse de colle durcie (12) et les ailes latérales (5, 6) pourvues des saillies d'ancrage (9). En vue d'augmenter de manière adéquate la solidité de la liaison, un cordon profilé (10) en polymère, qui établit une bonne liaison adhésive avec la colle de montage (12), est disposé à côté du profilé d'encadrement (3), au moins à des endroits sélectionnés. Lors du montage du vitrage, la masse de colle (12) pénètre à travers l'interstice subsistant entre l'aile latérale (5) et le rebord de fixation (14) et s'unit au cordon polymérique (10). Lors du démontage du vitrage, les ponts de colle sont sectionnés à l'aide d'un couteau (18).

## Description

La présente invention concerne un vitrage automobile prééquipé pour le collage dans la baie d'une carrosserie comportant un profilé d'encadrement en élastomère présentant un chenal à section en U pour la réception du cordon de colle de montage qui ne forme pas de liaison adhésive avec cette colle de montage, la liaison entre le profilé d'encadrement et le cordon de colle de montage étant assurée essentiellement par engagement mécanique avec épousement de forme de la colle de montage durcie avec des affouillements et/ou des saillies d'ancrage prévues sur les ailes latérales du profilé en forme de chenal. L'invention a trait, en outre, à un procédé pour la fabrication d'un tel vitrage automobile.

Des vitrages automobiles prééquipés pour le montage collé de ce type sont connus par le document EP-A-0 620 134. Le profilé d'encadrement est dans ce cas directement extrudé sur la zone marginale du vitrage en un élastomère apte à l'extrusion, en particulier un élastomère thermoplastique apte à l'extrusion. Ce vitrage automobile prééquipé pour le montage collé, connu, peut être monté selon la méthode de collage habituelle dans la carrosserie d'une automobile. Mais il a la propriété avantageuse de pouvoir être démonté après durcissement de la colle de montage par simple éjection, les ailes latérales du segment en forme de chenal se donnant et se séparant du cordon de colle durci. L'encadrement du vitrage prééquipé reste de cette façon intact, de sorte que le vitrage peut être réutilisé. Ce mode de fixation est d'une importance particulière dans le cas de réparations nécessaires, par exemple dans le cas d'une nouvelle application de peinture rendue nécessaire dans la zone de la baie de fenêtre. Ce mode de fixation est également avantageux dans le contexte de l'opération de démontage des vitrages en vue du recyclage.

Les forces nécessaires pour le démontage d'un vitrage prééquipé et monté de cette façon sont déterminées d'une part par la géométrie de la section du cadre dans la zone du chenal et d'autre part par la résistance à la traction de la colle ainsi que par la résistance à la traction de l'élastomère qui constitue le profilé d'encadrement. Dans la plupart des cas, la solidité souhaitée de la liaison peut être atteinte au moyen d'une configuration appropriée de la section transversale du profilé. Cependant, lorsque des exigences particulièrement élevées sont imposées quant à la solidité de la liaison, cette solidité de la liaison, telle qu'elle peut être atteinte par une modification de la géométrie de la section transversale du cadre et par le choix de l'élastomère, ne suffit pas.

L'invention a pour but de perfectionner un vitrage prééquipé pour le montage collé du type spécifié dans le préambule de telle sorte que la solidité de la liaison entre le rebord de fixation de la baie de fenêtre et le vitrage soit augmentée, sans que l'avantage particulier du système, à savoir la possibilité de réutiliser le vitrage prééquipé du profilé d'encadrement, ne soit perdu.

Ce but est atteint selon l'invention par le fait que l'aile latérale intérieure du profilé en forme de chenal est abaissée par rapport à l'autre aile ou pourvue d'évidements au bord ou de découpures, au moins à des endroits sélectionnés, de telle sorte qu'une partie de la masse de colle de montage introduite dans le chenal en U lors du montage du vitrage déborde par dessus l'aile latérale intérieure et se lie de façon adhésive, en dehors du profilé d'encadrement présentant la surface non adhésive, avec le rebord de fixation, d'une part, et d'autre part, la surface du verre ou un cordon ou un segment de cordon liés à la surface du verre.

L'invention tire profit du fait que, dans le cas des matières utilisées pour le profilé d'encadrement extrudé et pour la colle de montage dans la fabrication des vitrages automobiles du type habituel, la colle de montage durcie présente une excellente résistance à la traction. La solidité de la liaison mécanique est augmentée de façon appropriée selon l'invention par un collage direct supplémentaire, au moins par endroits, entre le rebord de fixation du cadre de fenêtre et le vitrage à côté du profilé d'encadrement. Par ailleurs, les liaisons collées locales produites de cette façon peuvent être sectionnées de façon simple avant le démontage des vitrages. Mais le profilé d'encadrement extrudé n'est pas endommagé, en tant que tel ou ne l'est de façon insignifiante, par cette opération de sectionnement, effectuée par exemple à l'aide d'un dispositif de coupe approprié, de sorte que sa fonction reste entière et que le vitrage est dans ce cas également réutilisable.

Le collage supplémentaire selon l'invention entre le rebord de fixation et le vitrage a lieu sur le côté intérieur de l'encadrement, c'est-à-dire à côté de l'aile latérale du chenal adjacente au champ visuel du vitrage. La zone de collage supplémentaire peut de cette façon être sectionnée depuis l'intérieur de l'habitacle du véhicule. L'invention est par conséquent particulièrement appropriée aux cas où, tout en conservant l'avantage d'une possibilité de démontage facile, une sécurité accrue contre la possibilité d'un démontage du vitrage de l'extérieur doit en même temps être obtenue. Des vitrages automobiles selon l'invention dans cette forme de réalisation, présentent donc une sécurité accrue contre les effractions.

Des avantages et des particularités supplémentaires de l'invention ressortiront des revendications et de la description suivante d'un exemple de réalisation préféré données avec référence aux dessins annexés.

Dans les dessins :

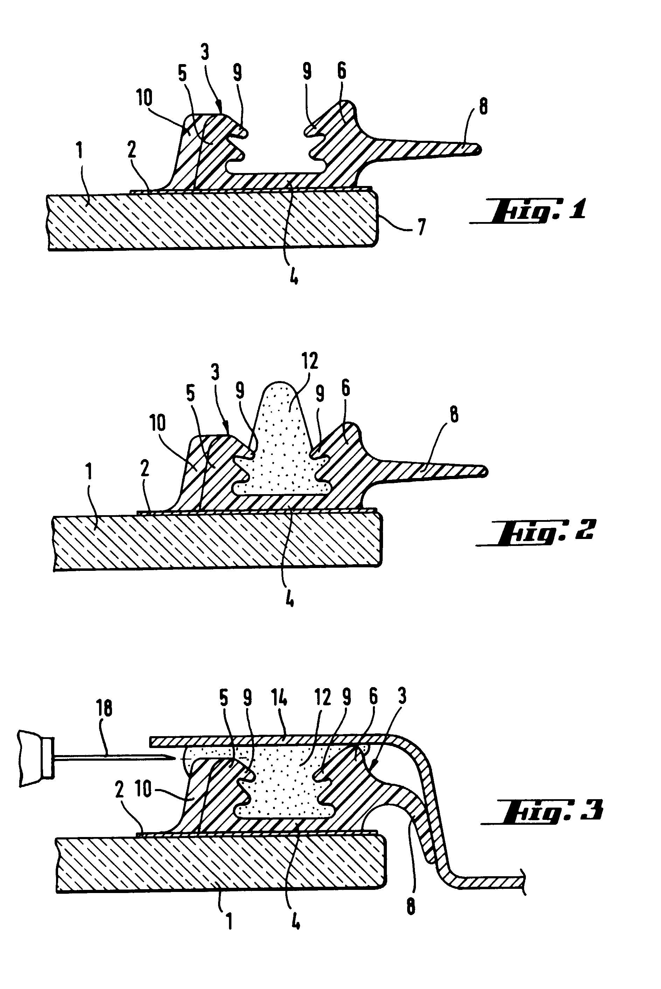

- la figure 1 montre une coupe à travers la zone marginale d'un vitrage automobile prééquipé d'un profilé d'encadrement selon un mode de réalisation de l'invention,
- la figure 2 montre le vitrage automobile prééquipé représenté sur la figure 1 après l'introduction de la colle de montage dans le chenal à colle du profilé d'encadrement,
- la figure 3 montre le vitrage après le montage dans la baie de fenêtre de la carrosserie de l'automobile, et
- la figure 4 montre un vitrage automobile prééquipé du profilé d'encadrement selon l'invention dans une vue d'ensemble de face.

Le vitrage 1 est représenté dans les dessins en tant que vitrage monolithique. Les vitrages automobiles monolithiques sont en règle générale des vitrages trempés, qualifiés de vitrages en verre de sécurité trempé. Ils sont utilisés habituellement pour les glaces latérales et pour les lunettes arrière. Puisque les glaces latérales sont souvent utilisées dans des tentatives d'effraction dans des automobiles, et puisque des vitrages de format particulièrement petit s'imposent pour le démontage complet non destructif d'un vitrage, l'invention qui rend plus difficile l'effraction convient en particulier pour des vitrages latéraux fixes. Bien entendu, elle peut être utilisée avec le même avantage dans le cas de lunettes arrière et dans le cas de pare-brise. Cependant, les pare-brise sont constitués en règle générale de verre feuilleté, qui est sensiblement plus fragile que du verre trempé et qui est détruit lorsqu'on tente de détacher un vitrage du type spécifié du cadre par effet de levier. Néanmoins, l'invention est aussi avantageuse pour des pare-brise, par exemple pour augmenter la solidité de la liaison en cas d'accident et pour empêcher une éjection d'un passager à travers la baie de fenêtre.

Le vitrage 1 est pourvu dans la zone marginale d'un cadre décoratif 2 en vernis opaque à cuire du type émail par exemple. Sur la couche de vernis formant le cadre décoratif 2 adhère le profilé d'encadrement 3 en élastomère, qui a été fabriqué par extrusion, par exemple d'un élastomère thermoplastique, de préférence après traitement de la couche de vernis 2 à l'aide d'un promoteur d'adhérence approprié. Des élastomères appropriés et un dispositif pour l'extrusion d'un tel profilé d'encadrement sont connus par le document EP-A-0 620 134, auquel il est fait référence dans ce cas.

Le profilé d'encadrement 3 présente en substance une section transversale en U et comporte une base 4, une aile latérale intérieure 5 et une aile latérale extérieure 6. Le profilé d'encadrement 3 est de préférence pourvu sur le côté extérieur d'une lèvre d'étanchéité 8 faisant saillie au-delà de la surface périphérique 7. Les ailes latérales 5 et 6 forment ensemble avec la base 4 un chenal pour la réception de la colle de montage. Elles sont pourvues sur leur face intérieure tournée vers le chenal de saillies d'ancrage 9, au moyen desquelles est produite la liaison mécanique avec la masse de colle durcie.

L'aile latérale extérieure 6 du profilé d'encadrement forme ce qui est qualifié d'élément d'espacement, qui détermine la distance entre le vitrage et le rebord de fixation du cadre de fenêtre lors du montage du vitrage. L'aile latérale intérieure 5 présente selon l'invention une hauteur quelque peu inférieure à l'aile latérale extérieure 6.

Dans la variante de l'invention représentée sur les figures, un cordon 10 d'une masse de colle durcie a été disposé directement à côté du profilé d'encadrement, de manière contiguë à l'aile latérale intérieure 5, cordon qui établit d'une part une liaison adhésive avec le vitrage 1 ou la couche 2 du cadre décoratif et d'autre part une bonne liaison adhésive avec la masse de colle de la colle de montage. Tandis que la colle de montage n'établit aucune liaison adhésive avec la matière du profilé d'encadrement 3, la matière du cordon 10 doit en principe être à même d'établir une bonne liaison de collage avec la colle de montage. De préférence, on peut pour cela utiliser la même matière que celle de la masse de colle de montage.

La disposition du cordon de colle 10 à côté du profilé d'encadrement 3 peut être réalisée à un moment ultérieur quelconque après l'extrusion du profilé d'encadrement 3. Avantageusement, le dépôt du cordon de colle 10 est cependant réalisé en même temps que l'opération d'extrusion pour le profilé d'encadrement 3, c'est-à-dire par coextrusion des deux matières différentes dans la même opération à l'aide d'un dispositif à filière approprié pour cette coextrusion. Dans ce cas, le cordon extrudé 10 peut, comme ce sera encore expliqué plus loin sur la base de la figure 4, être extrudé sur le vitrage en continu sous la forme d'un cordon continu, ou au contraire sous la forme de segments de cordon discontinu.

Avant le montage du vitrage, un cordon 12 de la masse de colle de montage est introduit dans le chenal en U du profilé d'encadrement 3 à l'aide d'une buse d'injection appropriée. La section transversale de ce cordon de colle 12 doit être dimensionnée de telle sorte que, d'une part, l'espace creux du chenal en U soit complètement rempli et que, d'autre part, une partie de la masse de colle, lors du montage du vitrage dans le cadre de fenêtre, se prolonge autour de l'aile latérale intérieure 5, entre en contact avec le cordon 10 se trouvant à côté de l'aile latérale 5 et forme avec celui-ci une liaison adhésive solide.

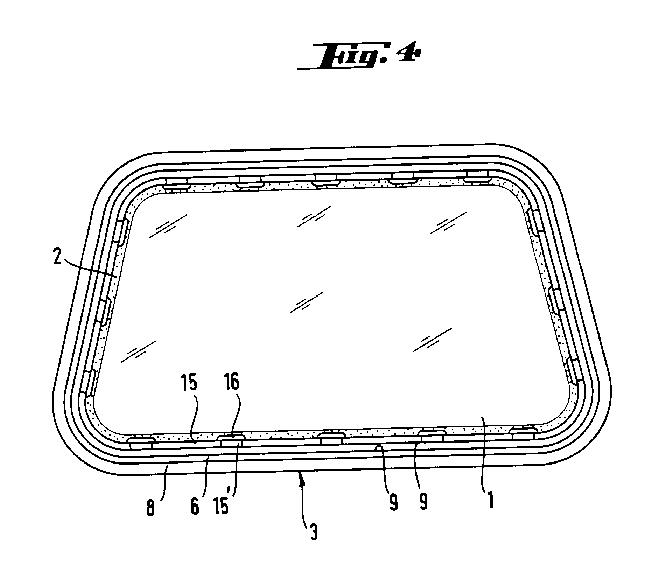

L'état final après le montage du vitrage dans le cadre de fenêtre est représenté sur la figure 3. On peut y voir comment une partie de la masse de colle 12 a pénétré à travers l'interstice entre l'aile latérale 5 et le rebord de fixation 14 et est en contact avec le cordon profilé 10, avec lequel elle forme une liaison adhésive durable.

Comme il a été dit plus haut, on ne sort pas du cadre de l'invention si l'on a omis de déposer le cordon 10 le long du cadre 5 mais, qu'en revanche, on a prévu une quantité de colle de pose telle qu'après avoir progressé dans l'interstice entre le haut de l'aile 5 et le rebord de fixation 14, elle descende le long de l'aile 5 jusqu'à venir au contact du vitrage 1 ou de la couche 2 qui le recouvre. Après durcissement de la colle de pose, la liaison adhésive se fait alors directement entre le vitrage et le rebord de fixation.

L'aile latérale intérieure 5 du profilé d'encadrement peut présenter sur toute sa longueur une hauteur inférieure à celle de l'aile latérale extérieure 6 de l'encadrement profilé, de sorte que la masse de colle 12 se prolonge par dessus l'aile latérale sur tout le pourtour de l'encadrement. La solidité accrue souhaitée de la liaison est cependant déjà atteinte lorsqu'on prévoit, non pas un cordon profilé 10 ininterrompu, mais au contraire, comme l'illustre la figure 4, de courts segments de cordon 16 seulement séparés les uns des autres et situés de place en place le long de l'aile latérale 5 du cadre profilé 3, de sorte que la liaison de collage supplémentaire n'est réalisée que sous forme de ponts de colle locaux.

La fabrication de l'encadrement profilé 3 représenté sur la figure 4, comportant des segments de cordon 16 disposés à distance les uns des autres, est à nouveau réalisée en une opération de coextrusion de l'encadrement profilé 3 et des segments de cordon 16. A cette fin, on utilise une construction de filière appropriée, qui présente à nouveau deux orifices de filières séparés l'un de l'autre, pour l'extrusion du profilé d'encadrement 3 d'une part et pour la coextrusion des segments de cordon polymérique 16 d'autre part, ainsi que des canaux d'amenée et des conduites d'amenée séparés pour les deux masses polymériques à extruder. L'orifice de filière pour l'extrusion des segments de cordon polymérique 16 peut dans ce cas être obturée par un registre, dont l'entraînement est commandé par l'unité de commande centrale du dispositif selon un programme prédéterminé. De cette façon, cet orifice de filière est ouvert et fermé aux endroits présélectionnés.

L'aile latérale intérieure 5 peut avoir localement la même hauteur que l'aile latérale extérieure 6 et être abaissée d'une faible mesure de par exemple 1 à 3 mm uniquement aux endroits où les segments de cordons 16 sont disposés. Cela peut être facilement réalisé lors de l'extrusion du profilé d'encadrement 3 par le fait qu'un registre est aussi disposé devant l'orifice de filière pour l'extrusion de l'encadrement profilé 3, registre qui réduit l'orifice de filière dans la mesure souhaitée aux endroits correspondants. Le dispositif d'entraînement actionnant ce registre est aussi commandé par l'unité de commande centrale selon un programme prédéterminé. Les segments surbaissés 15' qui en résultent ont de préférence la même hauteur que les segments de cordon 16 et forment avec le rebord de fixation du cadre de fenêtre l'interstice nécessaire pour le passage de la colle de montage lors du montage du vitrage.

La fixation par collage supplémentaire décrite du vitrage suffit pour augmenter la solidité de la liaison entre le vitrage et le cadre de fenêtre au point qu'une séparation non autorisée du vitrage depuis l'extérieur du véhicule devienne impossible ou soit en tout cas rendue plus difficile. Par ailleurs, les liaisons collées entre les segments de cordon 16 et la masse de colle de montage ou la liaison collée entre le profilé 10 et la masse de colle 12 peuvent être sectionnées depuis l'habitacle à l'aide d'un outil de coupe approprié 18 sans dommage important à l'encadrement profilé 3. Après le sectionnement de la liaison collée, le vitrage peut être sorti du cadre de fenêtre et être réutilisé ultérieurement de la façon connue. Il suffit, au moment de la réinstallation d'éliminer le reste de colle durcie sur le rebord de fixation et de procéder comme la première fois. La colle de pose est en quantité suffisante pour déborder et se glisser dans l'interstice entre le rebord de fixation et la partie supérieure de l'aile latérale intérieure 5. L'adhésion peut se faire alors sur les restes de la première colle de pose durcie.

## Revendications

1. Vitrage automobile prééquipé pour le collage dans la baie d'une carrosserie comportant un profilé d'encadrement en élastomère présentant un chenal à section en U pour la réception du cordon de colle de montage qui ne forme pas de liaison adhésive avec ladite colle de montage, la liaison entre le profilé d'encadrement et le cordon de colle de montage étant assurée essentiellement par engagement mécanique avec épousement de forme de la colle de montage durcie avec des affouillements et/ou des saillies d'ancrage prévues sur les ailes latérales du segment de profilé en forme de chenal, **caractérisé en ce que** l'aile latérale intérieure (5) du chenal en U est abaissée par rapport à l'autre aile ou pourvue d'évidements au bord ou de découpures, au moins à des endroits sélectionnés, de telle sorte qu'une partie de la masse de colle de montage (12) introduite dans le chenal en U lors du montage du vitrage déborde par dessus l'aile latérale intérieure et se lie de façon adhésive, en dehors du cadre profilé (3) présentant la surface non adhésive, avec le rebord de fixation (14), d'une part, et d'autre part la surface du verre ou un cordon (10) ou segment de cordon (16) liés à la surface du verre.

2. Procédé pour la fabrication d'un vitrage prééquipé par extrusion d'un cordon profilé en élastomère (3) qui présente une forme de chenal prévue pour la réception de la colle de montage, dans lequel l'élastomère formant le cordon profilé ne forme pas de liaison adhésive avec la colle de montage et où la liaison entre le cordon profilé et la colle de montage durcie est assurée par l'engagement mécanique avec épousement de forme avec les ailes latérales pourvues d'affouillements et/ou de saillies d'ancrage, **caractérisé en ce qu**'un cordon profilé (3), comportant une aile latérale intérieure (5) moins haute que l'aile latérale extérieure (6) du chenal, est extrudé **et en ce que** le cordon de colle de montage (12) est calibré pour déborder par dessus l'aile latérale intérieure (5) de manière à atteindre une surface sur laquelle la colle de montage (12) adhère.

3. Procédé selon la revendication 2, **caractérisé en ce que** la surface sur laquelle la colle de montage adhère est la surface du vitrage (1) ou celle d'un cadre décoratif (2) sur celle-ci.

4. Procédé selon la revendication 2, **caractérisé en ce qu'**un cordon (10 ; 16) en une matière présentant de l'adhérence à la colle de montage (12) est extrudé latéralement le long de l'aile latérale intérieure (5) du cordon profilé en élastomère (3) **et en ce que** c'est sur ledit cordon (10 ; 16) que s'effectue l'adhérence.

5. Procédé selon la revendication 4, **caractérisé en ce que** l'extrusion du cordon profilé en élastomère (3) et celle du cordon (10 ; 16) en une matière présentant de l'adhérence à la colle de montage sont simultanées et constituent notamment une coextrusion.

6. Procédé selon la revendication 4 ou la revendication 5, **caractérisé en ce que** le cordon (16) présentant de l'adhérence à la colle de montage est extrudé sur le cordon profilé (3), de manière interrompue pour constituer des segments séparés les uns des autres.

7. Procédé suivant l'une des revendications 5 ou 6, **caractérisé par** l'utilisation d'une tête d'extrusion comportant des canaux d'amenée et des orifices de filières séparés les uns des autres pour la coextrusion du cordon profilé en élastomère (3) et du cordon (10 ; 16) en une matière plastique présentant de l'adhérence à la colle de montage, l'orifice de filière pour l'extrusion du cordon interrompu (16) étant notamment ouvert et fermé aux endroits du cordon profilé souhaités.
